(19) Europäisches Patentamt
European Patent Office
Office européen des brevets

(11) **EP 2 174 857 B1**

(12) **EUROPEAN PATENT SPECIFICATION**

(45) Date of publication and mention
of the grant of the patent:
**17.07.2013 Bulletin 2013/29**

(51) Int Cl.:
***B62D 6/00*** *(2006.01)*  ***B62D 5/04*** *(2006.01)*
***B62D 101/00*** *(2006.01)*  ***B62D 103/00*** *(2006.01)*
***B62D 113/00*** *(2006.01)*  ***B62D 119/00*** *(2006.01)*
***B62D 121/00*** *(2006.01)*  ***B60T 8/1755*** *(2006.01)*

(21) Application number: **08836237.1**

(22) Date of filing: **01.10.2008**

(86) International application number:
**PCT/JP2008/067858**

(87) International publication number:
**WO 2009/044784 (09.04.2009 Gazette 2009/15)**

(54) **VEHICLE STEERING CONTROL DEVICE**

STEUERVORRICHTUNG FÜR EINE FAHRZEUGLENKUNG

DISPOSITIF DE COMMANDE DE DIRECTION DE VÉHICULE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **04.10.2007 JP 2007260671**

(43) Date of publication of application:
**14.04.2010 Bulletin 2010/15**

(73) Proprietor: **TOYOTA JIDOSHA KABUSHIKI KAISHA**
**Toyota-shi,**
**Aichi-ken, 471-8571 (JP)**

(72) Inventors:
• **KODAIRA, Takahiro**
**Toyota-shi,**
**Aichi-ken 471-8571 (JP)**

• **KUNIHIRO, Yoji**
**Toyota-shi,**
**Aichi-ken 471-8571 (JP)**

(74) Representative: **Winter, Brandl, Fürniss, Hübner, Röss, Kaiser, Polte - Partnerschaft**
**Alois-Steinecker-Strasse 22**
**85354 Freising (DE)**

(56) References cited:

| | |
|---|---|
| DE-A1-102006 033 458 | JP-A- 11 011 332 |
| JP-A- 11 011 332 | JP-A- 2000 233 761 |
| JP-A- 2000 233 761 | JP-A- 2000 233 762 |
| JP-A- 2004 255 943 | JP-A- 2004 255 943 |
| JP-A- 2005 193 779 | JP-A- 2005 193 779 |
| JP-A- 2005 289 217 | JP-A- 2006 131 064 |
| JP-A- 2006 131 064 | US-A1- 2005 247 510 |

## Description

Technical Field

The present invention relates to a vehicle steering control apparatus (or a control apparatus for a power steering apparatus) for controlling a power steering apparatus of a vehicle.

Background Art

A vehicle, such as an automobile, uses an electric power steering apparatus, which applies steering assist torque to a steering mechanism including front wheels, by driving an electric motor in accordance with steering torque applied by a driver (or a person in the vehicle) operating a steering wheel. In such an electric power steering apparatus, as disclosed in patent documents 1 to 3, there is a technology in which the steering assist torque is adjusted, as occasion demands, in consideration of a vehicle's yaw rate. Moreover, as disclosed in a patent document 4, phase compensation (i.e. damping control) is performed on a target value of a base assist current, which is supplied to the electric motor in accordance with the applied steering assist torque. By virtue of this structure, a damping component can be considered, resulting in an improvement in the convergence of the steering.
Patent Document 1: Japanese Patent Application Laid Open No. 2005-193779
Patent Document 2: Japanese Patent Application Laid Open No. 2006-131064
Patent Document 3: Japanese Patent Application Laid Open No. 2006-160180
Patent Document 4: Japanese Patent Application Laid Open No. 2004-203112
Patent Document 2, considered as the closest prior art, shows the preamble of claim 1.

Disclosure of Invention

Subject to be Solved by the Invention

In order to improve the convergence of the vehicle as described above, there is a possible measure to increase the aforementioned damping control. However, if the damping control is increased, a driver's steering feeling of the steering wheel becomes bad. More specifically, it gives a heavy impression in operating the steering wheel, and gives such an impression that the vehicle does not turn as the driver desires. On the other hand, if the damping control is reduced, steering vibration and a vehicle's yaw oscillation are coupled to each other depending on the vehicle feature (or structure or the like), which may deteriorate the convergence of the vehicle as a whole. That is, the phase of the steering vibration and the phase of the vehicle's yaw oscillation are in a reverse-phase relationship, which likely increases the vibration applied to the vehicle as a whole. Even in each configuration considering the aforementioned yaw rate, the technical problems are not solved as the coupling between the steering vibration and the vehicle's yaw oscillation is not considered.
In view of the above-exemplified problems, it is therefore an object of the present invention to provide a vehicle steering control apparatus which can improve the convergence of a vehicle while improving the convergence of steering.

Means for Solving the Subject

The above object of the present invention can be achieved by a vehicle steering control apparatus provided with: a first calculating device for calculating a basic assist steering force to assist a steering operation on the basis of at least one of an steering angle and steering torque corresponding to the steering operation by a person in a vehicle; an obtaining device for obtaining a lateral force of each of the front wheels and rear wheels; a second calculating device for both calculating a first correction steering force which reduces the basic assist steering force on the basis of the lateral force of the rear wheels, and calculating a second correction steering force which increases the basic assist steering force on the basis of the lateral force of the front wheels; and a steering force applying device for applying, to the vehicle, a target assist steering force obtained by adding both the first correction steering force and the second correction steering force to the basic assist steering force.
According to the vehicle steering control apparatus of the present invention, by the operation of the steering force applying device including an electric motor or the like; the basic assist steering force calculated by the first calculating device, is applied to a steering mechanism. The basic assist steering force is typically a steering force calculated on the basis of the steering torque or the steering angle detected along with the steering operation by the person in the vehicle (that is, a steering force which is a base for assisting the steering operation). This assists the steering operation by the person in the vehicle. In other words, the operation of a so-called electrical power steering operation (EPS) is controlled.

In the present invention, in particular, by the operation of the obtaining device, the lateral force of each of the front wheels and the rear wheels of the vehicle is obtained. Here, typically, the lateral force of each of the front wheels and the rear wheels is obtained by sampling the value of the lateral force of each of the front wheels and the rear wheels with a proper period. Incidentally, the "front wheels" of the present invention indicate wheels located relatively on the front side with respect to the travelling direction of the vehicle, and the "rear wheels" of the present invention indicate wheels located relatively on the rear side with respect to the travelling direction of the vehicle. Typically, the front wheels are wheels steered or turned by applying the assist steering force thereto; however, the rear wheels may be the steered or turned wheels.

Then, by the operation of the second calculating device, the first correction steering force is calculated on the basis of the lateral force of the rear wheels obtained by the obtaining device (e.g. a proportional value of the lateral force of the rear wheels and a differential value of the lateral force of the rear wheels, as detailed later). In the same manner, by the operation of the second calculating device, the second correction steering force is calculated on the basis of the lateral force of the front wheels obtained by the obtaining device (e.g. a proportional value of the lateral force of the front wheels, as detailed later). The first correction steering force is a steering force which mainly acts to reduce the basic assist steering force calculated by the first calculating device. In particular, as detailed later, the first correction steering force is preferably a steering force which mainly acts to steer or turn the steered wheels in a direction of converging the yaw oscillation of the vehicle, for example; if the vehicle is in a turning state (particularly if the vehicle is in a transitional or transient turning state). On the other hand, the second correction steering force is a steering force which mainly acts to increase the basic assist steering force calculated by the first calculating device. In particular, as detailed later, for example, if the vehicle is in a turning state (particularly, in a steady-turning state), the second correction steering force is preferably a steering force which mainly acts to increase the basic assist steering force to compensate for the reduction in the basic assist steering force by the first correction steering force. Then, by the operation of the steering force applying device; the target assist steering force obtained by adding each of the first correction steering force and the second correction steering force to the basic assist steering force, is applied to the steering mechanism. In other words, after the correction or adjustment based on the first correction steering force and the second correction steering force is performed on the basic assist steering force, the corrected or adjusted basic assist steering force (i.e. the target assist steering force) is actually applied to the steering mechanism.

As described above, according to the present invention, the target assist steering force obtained by adding the first correction steering force and the second correction steering force to the basic assist steering force is applied. Thus, it is possible to preferably prevent the coupling or resonance between the steering vibration and the vehicle's yaw oscillation particularly; by adding the first correction steering force which reduces the basic assist steering force, to the basic assist steering force. In other words, as described above, merely applying the basic assist steering force calculated in accordance with the steering torque and the steering angle, likely causes the yaw oscillation in the vehicle particularly in the transient or transitional turning state; however, the present invention can preferably prevent such a disadvantage. Therefore, it can preferably converge the vibration in the front wheels, resulting in improved convergence of the vehicle. In addition, in the present invention, the coupling or resonance between the steering vibration and the vehicle's yaw oscillation, is preferably prevented by the first correction steering force and the second correction steering force without excessively increasing degree of the damping control. Therefore, it is possible to preferably prevent the disadvantage that the steering feeling becomes bad due to the excessively increased degree of the damping control. In other words, according to the present invention, the convergence of the steering can be also improved while improving the convergence of the vehicle as described above.

On the other hand, for example, if the vehicle is in the steady-turning state, the coupling or the resonance between the steering vibration and the vehicle's yaw oscillation less likely occurs since the vehicle has stable behavior. On the one hand, the first correction steering force for preventing the coupling or the resonance between the steering vibration and the vehicle's yaw oscillation (in other words, the first correction steering force for reducing the basic assist steering force) is added even if the vehicle is in the steady-turning state. Thus, if emphasis is placed only on the prevention of the coupling or the resonance between the steering vibration and the vehicle's yaw oscillation by merely adding the first correction steering force; the person in the vehicle likely recognizes that the steering operation feels heavy, for example, when the vehicle is in the steady-turning state. According to the present invention, however, the target assist steering force obtained by adding the first correction steering force and the second correction steering force (i.e. particularly, the second correction steering force which increases the basic assist steering force) to the basic assist steering force, is applied. Thus, it is possible to preferably prevent the reduction in the target assist steering force applied to assist the steering operation, for example, if the vehicle is in the steady-turning state. Therefore, it hardly allows the person in the vehicle to recognize discomfort in the steering operation, for example, even if the vehicle is in the steady-turning state.

As described above, according to the present invention, it is possible to preferably compensate for lack of the steering force which easily occurs particularly in the steady-turning state; while preferably preventing the coupling or the resonance between the steering vibration and the vehicle's yaw oscillation which easily occurs particularly in the transient turning state (in other words, while improving the convergence of the vehicle and the convergence of the steering).

In one aspect of the vehicle steering control apparatus of the present invention, the second calculating device calculates both the first correction steering force and the second correction steering force such that a sum of the first correction steering force and the second correction steering force is nearly zero when the vehicle performs steady-turning.

According to this aspect, the reduction in the basic assist steering force by the first correction steering force, can be canceled by the increase in the basic assist steering force by the second correction steering force. This can preferably prevent the reduction in the target assist steering force applied to assist the steering operation, for example, if the vehicle is in the steady-turning state. In other words, the person in the vehicle can perform the steering operation with the same feeling as in a case where the steering operation is assisted by the basic assist steering force.

Incidentally, the "nearly zero" in the present invention broadly includes a case where the sum is literally zero, as well as a case where the sum is deemed to be substantially zero in consideration of the feeling of the steering operation given to the person in the vehicle. Typically, any situation that the first correction steering force and the second correction steering force cancel each other to the extent that the steering operation is performed with the same feeling as in the case where the steering operation is assisted by the basic assist steering force; may be included in a range of the "nearly zero" in the present invention.

In another aspect of the vehicle steering control apparatus of the present invention, the second calculating device calculates a third correction steering force which reduces the basic assist steering force on the basis of a proportional value of the lateral force of the rear wheels; calculates a fourth correction steering force which reduces the basic assist steering force on the basis of a differential value of the lateral force of the rear wheels; and calculates a sum of the third correction steering force and the fourth correction steering force calculated, as the first correction steering force.

According to this aspect, by virtue of the first correction steering force which is the sum of the third correction steering force and the fourth correction steering force, it is possible to improve the convergence of the steering while improving the convergence of the vehicle, as described above.

In an aspect of the vehicle steering control apparatus in which the sum of the third correction steering force and the fourth correction steering force is calculated as the first correction steering force, as described above, the second calculating device may calculate both the third correction steering force and the second correction steering force; such that a sum of the third correction steering force and the second correction steering force is nearly zero, when the vehicle performs steady-turning.

Since the vehicle has stable behavior (in other words, the vehicle's behavior has a small change or has little change) in the steady-turning, the differential value of the lateral force of the rear wheels is considered to be a small value, as compared to the proportional value of the lateral force of the rear wheels. In other words, if the vehicle has the stable behavior, the differential value of the lateral force of the rear wheels does not have to be considered at all or hardly needs to be considered, as compared to the proportional value of the lateral force of the rear wheels. Thus, the fourth correction steering force calculated on the basis of the differential value of the lateral force of the rear wheels does not have to be considered at all or hardly needs to be considered, as compared to the third correction steering force calculated on the basis of the proportional value of the lateral force of the rear wheels. Therefore, by virtue of such construction, the reduction in the basic assist steering force by the first correction steering force (which substantially equals to the third correction steering force in the steady-turning), can be canceled by the increase in the basic assist steering force by the second correction steering force. This can preferably prevent the reduction in the target assist steering force applied to assist the steering force, for example, if the vehicle is in the steady-turning state.

In another aspect of the vehicle steering control apparatus of the present invention, it is further provided with a detecting device for detecting a speed of the vehicle and the steering angle, the obtaining device obtains the lateral force of each of the front wheels and the rear wheels; by estimating the lateral force of each of the front wheels and the rear wheels on the basis of each of a yaw rate and a slip angle estimated on the basis of the speed of the vehicle and the steering angle detected by the detecting device.

According to this aspect, instead of directly detecting the lateral force of each of the front wheels and the rear wheels, it is possible to estimate the lateral force of each of the front wheels and the rear wheels. In other words, instead of so-called feedback control in which the first correction steering force and the second correction steering force are calculated after the lateral force of each of the front wheels and the rear wheels is actually detected; it is possible to perform so-called feed-forward control in which the first correction steering force and the second correction steering force are calculated after the lateral force of each of the front wheels and the rear wheels is estimated. In general, there is a constant delay: between timing of actually detecting the lateral force of each of the front wheels and the rear wheels, and timing that the target assist steering force in consideration of the first correction steering force and the second correction steering force calculated on the basis of the detected lateral force, is applied. Therefore, when the target assist steering force is applied, the lateral force of each of the front wheels and the rear wheels has highly likely changed, which likely causes the discomfort in the steering operation. According to this aspect, however, the lateral force of each of the front wheels and the rear wheels can be estimated in advance, so that it is possible to properly prevent the disadvantage that the delay of the feedback control causes the discomfort in the steering operation.

Even if the first correction steering force and the second correction steering force are calculated after the lateral force of each of the front wheels and the rear wheels is estimated, there is likely a certain degree of delay due to the time required for the estimation operation and the calculation operation. Therefore, even if the feed-forward control is performed (and moreover, even if the feedback control is performed), it is preferable to further perform delay compensation, as described later.

In another aspect of the vehicle steering control apparatus of the present invention, the second calculating device respectively calculates the first correction steering force and the second correction steering force on the basis of; a multiplication result between the lateral force of the rear wheels and a first correction coefficient calculated on the basis of a motion model of the vehicle in a planar or plane direction and a multiplication result between the lateral force of the front wheels and a second correction coefficient calculated on the basis of a motion model of the vehicle in a planar or plane direction.

According to this aspect, the first correction steering force is calculated on the basis of the multiplication result between the first correction coefficient and the lateral force of the rear wheels. In the same manner, the second correction steering force is calculated on the basis of the multiplication result between the second correction coefficient and the lateral force of the front wheels. In particular, the first correction coefficient and the second correction coefficient are calculated on the basis of the motion model of the vehicle, so that it is possible to calculate each of the first correction steering force and the second correction steering force, relatively easily and highly accurately.

Incidentally, the first correction coefficient and the second correction coefficient are calculated on the basis of the motion model of the vehicle in the planar or plane direction. In particular, the first correction coefficient and the second correction coefficient are preferably obtained by solving an equation based on the motion model (i.e. the equation of motion for the vehicle) while considering that; each of (i) the prevention of the coupling or the resonance between the steering vibration and the vehicle's yaw oscillation and (ii) the prevention of the reduction in the target assist steering force in the steady-turning state, is to be achieved, as described above.

Moreover, if the sum of the third correction steering force and the fourth correction steering force is calculated as the first correction steering force, the first correction coefficient is preferably formed from both a third correction coefficient by which the proportional value of the lateral force of the rear wheels is multiplied, and a fourth correction coefficient by which the differential value of the lateral force of the rear wheels is multiplied. In this case, the third correction steering force is calculated on the basis of the multiplication result between the third correction coefficient and the proportional value of the lateral force of the rear wheels. In the same manner, the fourth correction steering force is calculated on the basis of the multiplication result between the fourth correction coefficient and the differential value of the lateral force of the rear wheels.

In an aspect of the vehicle steering control apparatus in which the first correction steering force and the second correction steering force are calculated on the basis of the multiplication result between the first correction coefficient or the second correction coefficient and the lateral force of the front wheels or the lateral force of the rear wheels, the first correction coefficient and the second correction coefficient may have a dependency to a speed of the vehicle, and the second calculating device may calculate each of the first correction steering force and the second correction steering force, by using a coefficient obtained; by multiplying the first correction coefficient and the second correction coefficient when the speed of the vehicle is a predetermined speed, by a speed coefficient set on the basis of each of an actual speed of the vehicle and the vehicle-speed dependency of the first correction coefficient and the second correction coefficient.

By virtue of such construction, each of the first correction steering force and the second correction steering force can be calculated, relatively easily, by using the vehicle-speed dependency of the first correction coefficient and the second correction coefficient. In particular, if each of the first correction coefficient and the second correction coefficient is stored, for example, in a memory or the like in advance when the speed of the vehicle is the predetermined speed; the operation of calculating the correction coefficients can be further simplified. Therefore, it is possible to significantly simplify the operation of calculating the first correction steering force and the second correction steering force.

In another aspect of the vehicle steering control apparatus of the present invention, the second calculating device performs delay compensation in consideration of time required until the first correction steering force and the second correction steering force are calculated, on the first correction steering force and the second correction steering force, and the steering force applying device applies the target assist steering force obtained; by adding both the first correction steering force and the second correction steering force on which the delay compensation is performed, to the basic assist steering force.

In general, a fixed amount of time is required from the time point in which the operation of calculating the first correction steering force and the second correction steering force is started, to the time point in which the target assist steering force in consideration of the first correction steering force and the second correction steering force is applied. Therefore, the vehicle's behavior when the target assist steering force is applied, likely changes as compared to the vehicle's behavior when the calculation operation is started, which likely causes the discomfort in the steering operation. According to this aspect, however, the delay compensation is performed in consideration of the time required to calculate the first correction steering force and the second correction steering force, so that it is possible to properly prevent the disadvantage that the delay causes the discomfort in the steering operation.

The operation and other advantages of the present invention will become more apparent from the embodiment explained below.

Brief Description of Drawings

[FIG. 1] FIG. 1 is an outline structural view conceptually showing the basic structure of an embodiment of the vehicle steering control apparatus of the present invention.
[FIG. 2] FIG. 2 is a flowchart conceptually showing an entire operation of an electric power steering apparatus.
[FIG. 3] FIG. 3 is a graph showing basic assist torque.
[FIG. 4] FIG. 4 is a graph showing a correlation of a coefficient by which a lateral force of front wheels is multiplied when correction torque is calculated, with respect to a vehicle speed.
[FIG. 5] FIG. 5 is a graph showing a correlation of a coefficient by which a proportional value of a lateral force of rear wheels is multiplied when correction torque is calculated, with respect to the vehicle speed.
[FIG. 6] FIG. 6 is a graph showing a correlation of a coefficient by which a differential value of the lateral force of the rear wheels is multiplied when correction torque is calculated, with respect to the vehicle speed.
[FIG. 7] FIG. 7 is a graph showing a correlation of the multiplied value between the coefficient shown in FIG. 5 and the coefficient shown in FIG. 6, with respect to the vehicle speed.
[FIG. 8] FIG. 8 is a graph showing the value of a back-and-forth acceleration coefficient with respect to the absolute value of back-and-forth acceleration.
[FIG. 9] FIG. 9 is a graph showing the value of the back-and-forth acceleration coefficient with respect to an elapsed time from the start of changing the back-and-forth acceleration.
[FIG. 10] FIG. 10 is a graph showing the values of ABS coefficients with respect to time.

Description of Reference Codes

| 1 | vehicle |
|------|----------------------------------|
| 5, 6 | front wheel |
| 7, 8 | rear wheel |
| 10 | electric power steering apparatus |
| 11 | steering wheel |
| 13 | steering angle sensor |
| 14 | torque sensor |
| 15 | electric motor |
| 30 | ECU |
| 41 | vehicle speed sensor |

Best Mode for Carrying Out the Invention

Hereinafter, the best mode for carrying out the invention will be explained with reference to the drawings.

(1) Basic Structure

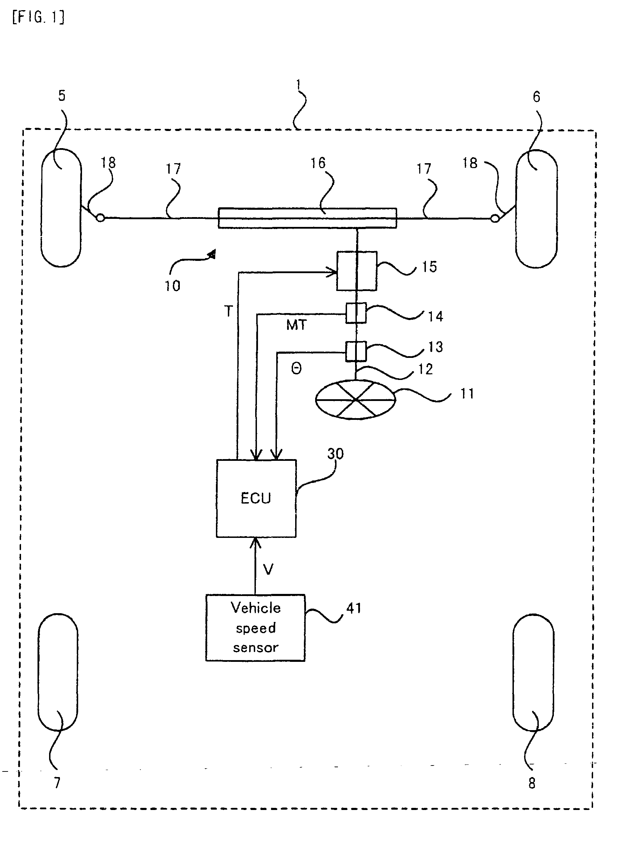

Firstly, with reference to FIG. 1, an explanation will be given on the basic structure of an embodiment of the vehicle steering control apparatus of the present invention. FIG. 1 is an outline structural view conceptually showing the basic structure of a vehicle which adopts the embodiment of the vehicle steering control apparatus of the present invention.
As shown in FIG. 1, a vehicle 1 is provided with front wheels 5 and 6 i.e. wheels 5, 6 and rear wheels 7 and 8 i.e. wheels 7, 8. At least either one of the front wheels and the rear wheels are driven by obtaining the driving force of an engine. At the same time, the front wheels are steered, so that the vehicle 1 can travel in a desired direction.

The front wheels 5, 6, which are steered wheels, are steered by; an electric power steering apparatus 10, which is driven in accordance with the steering of a steering wheel 11 by a driver. Specifically, the electric power steering apparatus 10 is, for example, an electric power steering apparatus in a rack-and-pinion method. And the electric power steering apparatus 10 is provided with: a steering shaft 12 whose one end is connected to the steering wheel 11; a rack-and-pinion mechanism 16 connected to the other end of the steering shaft 12; a steering angle sensor 13 for detecting an steering angle θ, which is a rotational angle of the steering wheel 11; a torque sensor 14 for detecting steering torque MT applied to the steering shaft 12 by steering the steering wheel 11; and an electric motor 15 for both generating an assist steering force which reduces a driver's steering load and applying the assist steering force to the steering shaft 12 through a not-illustrated reduction gear to reduce speed.

In the electric power steering apparatus 10, an ECU 30 calculates target assist torque T, which is torque to be generated by the electric motor 15, on the basis of ; the steering angle θ which is outputted from the steering angle sensor 13, the steering torque MT which is outputted from the torque sensor14, and a vehicle speed V which is outputted from a vehicle speed sensor 41.

The target assist torque T is outputted from the ECU 30 to the electric motor 15; and an electric current according to the target assist torque T is supplied to the electric motor 15, by which the electric motor 15 is driven. By this, a steering assist force is applied from the electric motor 15 to the steering shaft 12, which results in a reduction of the driver's steering load. Moreover, by virtue of the rack-and-pinion mechanism 16, a force in the rotational direction of the steering shaft 12 is converted to a force in a reciprocating direction of a rack bar 17. The both ends of the rack bar 17 are respectively coupled to the front wheels 5, 6 through a tie rod 18. And the direction of the front wheels 5, 6 is changed in accordance with the reciprocating motion of the rack bar 17.

(2) Operation Principle

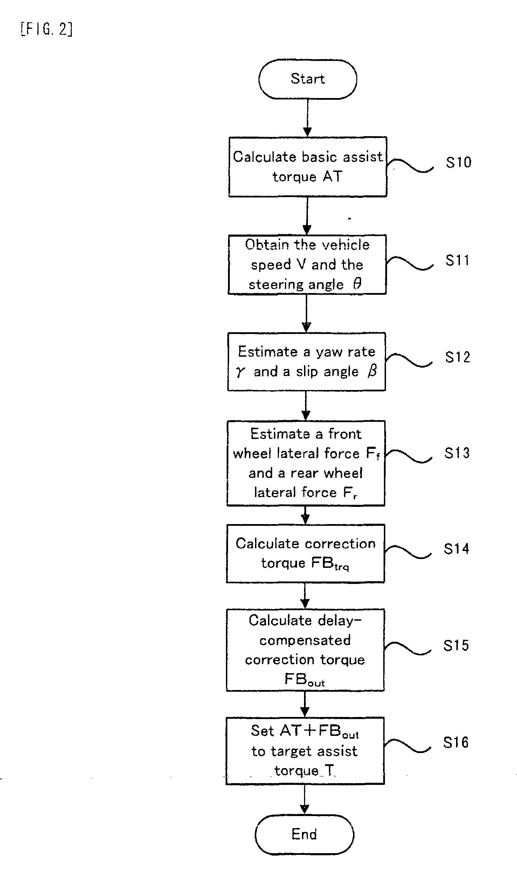

Next, with reference to FIG. 2, a more detailed explanation will be given on the operation of the electric power steering apparatus 10 in the embodiment. FIG. 2 is a flowchart conceptually showing an entire operation of the electric power steering apparatus 10.

As shown in FIG. 2, basic assist torque AT which is a base of the assist steering force to be applied from the electric motor 15, is calculated by the operation of the ECU 30 (step S10). When the basic assist torque AT is calculated; firstly, various signals (e.g. the vehicle speed V, the steering torque MT, and the like) necessary to calculate the basic assist torque AT, are read by the ECU 30. Then, the basic assist torque AT is calculated on the basis of the read various signals.

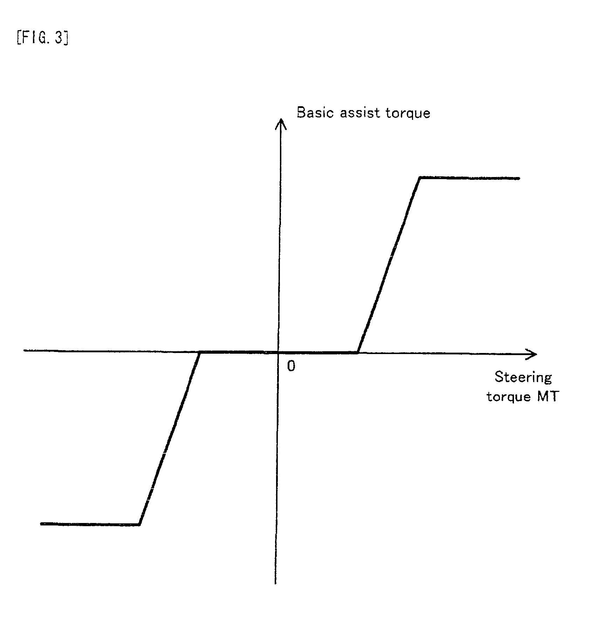

Now, with reference to FIG. 3, a specific example of an operation of calculating the basic assist torque AT will be described. FIG. 3 is a graph showing the basic assist torque AT.

As shown in FIG. 3, for example, the basic assist torque AT may be calculated on the basis of a graph (or mapping) indicating a relation between the steering torque MT and the basic assist torque AT. More specifically, in order to ensure a play or margin of the steering wheel 11, the basic assist torque AT is calculated as 0, i.e., zero if the steering torque MT is relatively small. If the steering torque MT has a certain degree of magnitude; the larger basic assist torque AT is calculated as the steering torque MT increases. If the steering torque MT is greater than a predetermined value; the basic assist torque AT with a constant value which does not vary depending on the magnitude of the steering torque MT, is calculated. At this time, as the vehicle speed V is higher, the basic assist torque AT may have a smaller value.

Incidentally, the exemplified operation of calculating the basic assist torque AT is merely one example, and obviously, another method may be used for the calculation of the basic assist torque AT.

Back in FIG. 2 again, then, the vehicle speed V and the steering angle θ are obtained by the operation of the ECU 30 (step S11). Specifically, both the vehicle speed V detected on the vehicle speed sensor 41 and the steering angle θ detected on the steering angle sensor 13, are outputted to the ECU 30.

Then, both a yaw rate γ and a slip angle β of the vehicle 1 are estimated (or calculated) by the operation of the ECU 30, on the basis of each of the vehicle speed V and the steering angle θ obtained in the step S11 (step S12). The estimation operation is performed on the basis of a motion equation in the plane direction of the vehicle 1.

Specifically, the motion equation of the vehicle 1 is expressed by an equation 1; wherein a distance between a front shaft and the center of gravity of the vehicle 1 is $L_f$, a distance between a rear shaft and the center of gravity of the vehicle 1 is $L_r$, the inertia moment about a yaw axis of the vehicle 1 is I, a front cornering power of the vehicle 1 is $K_f$, a rear cornering power of the vehicle 1 is $K_r$, the mass of the vehicle 1 is m, and a vehicle rudder angle is δ.

[Equation 1]

$$\begin{bmatrix} \dot{\gamma} \\ \dot{\beta} \end{bmatrix} = \begin{bmatrix} -\dfrac{L_f{}^2 K_f + L_r{}^2 K_r}{IV} & \dfrac{L_r K_r - L_f K_f}{I} \\ -1 + \dfrac{L_r K_r - L_f K_f}{mV^2} & -\dfrac{K_f + K_r}{mV} \end{bmatrix} \begin{bmatrix} \gamma \\ \beta \end{bmatrix} + \begin{bmatrix} \dfrac{L_f K_r}{I} \\ \dfrac{K_f}{mV} \end{bmatrix} \delta$$

Here, the distance $L_f$ between the front shaft and the center of gravity of the vehicle 1, the distance $L_r$ between the rear shaft and the center of gravity of the vehicle 1, the inertia moment I about the yaw axis of the vehicle 1, the front cornering power $K_f$ of the vehicle 1, the rear cornering power $K_r$ of the vehicle 1, and the mass m of the vehicle 1 are unique values which are unique to the vehicle 1. Thus, by inputting specific examples of the unique values (or common parameters) to the equation 1, the equation 1 becomes a function of the vehicle speed V and the vehicle rudder angle $\delta$. Moreover, the rudder angle $\delta$ is obtained from the steering angle $\theta$, a gear ratio of the rack-and-pinion mechanism, and the like (in other words, the specification of the electric power steering apparatus 10). Thus, by integrating each of differential values of the yaw rate $\gamma$ and the slip angle $\beta$ obtained from the equation 1, the yaw rate $\gamma$ and the slip angle $\beta$ are estimated from the vehicle speed V and the steering angle $\theta$.

Then, a lateral force $F_f$ of the front wheels 5, 6 and a lateral force $F_r$ of the rear wheels 7, 8 are estimated by the operation of the ECU 30, on the basis of each of the yaw rate $\gamma$ and the slip angle $\beta$ estimated in the step S12 (step S13). Even the estimation operation is performed on the basis of motion equations in the plane direction or the planar direction of the vehicle 1. Specifically, the lateral force $F_f$ of the front wheels 5, 6 and the lateral force $F_r$ of the rear wheels 7, 8 are estimated by using equations 2 and 3.

[Equation 2]

$$F_r = K_r \left( \frac{L_r \times \gamma}{V} - \beta \right)$$

[Equation 3]

$$F_f = K_f \left( \delta - \beta - \frac{L_f \times \gamma}{V} \right)$$

Then, correction torque $FB_{trq}$ for correcting the basic assist torque AT calculated in the step S10, is calculated by the operation of the ECU 30; on the basis of each of the lateral force $F_f$ of the front wheels 5, 6 and the lateral force $F_r$ of the rear wheels 7, 8 estimated in the step S13 (step S14). Specifically the correction torque $FB_{trq}$ is calculated by an equation 4. Incidentally, in the equation 4, a trail of the vehicle 1 is $L_t$; a period in which the lateral force $F_f$ of the front wheels 5, 6 and the lateral force $F_r$ of the rear wheels 7, 8 are estimated is $T_{smp}$; (in other words, a period in which the operations shown in FIG. 2 are performed: a sampling period); and the lateral force $F_r$ of the rear wheels 7, 8 estimated one step before is $F_{rz}$. Moreover, $k_0$, $k_1$, and $k_2$ are predetermined coefficients shown in equations 5 to 7, respectively. Incidentally, in the equations 5 to 7, it is assumed that the normalized front cornering power of the vehicle 1 is $C_f$; and that the normalized rear cornering power of the vehicle 1 is $C_r$.

[Equation 4]

$$FB_{trq} = -k_0 F_f L_t + k_1(F_r + k_2 F_r s)$$

$$= -k_0 F_f L_t + k_1(F_r + k_2 \times \frac{F_r - F_{rz}}{T_{smp}})$$

[Equation 5]

$$k_0 = -\frac{C_f \left(L_f g \cdot C_r + g \cdot C_r L_r - V^2\right)}{C_r V^2 - C_f V^2 + g \cdot C_f C_r L_r + L_f g \cdot C_r C_f}$$

[Equation 6]

$$k_1 = -\frac{L_f L_t C_f \left(L_f g \cdot C_r + g \cdot C_r L_r - V^2\right)}{\left(C_r V^2 - C_f V^2 + g \cdot C_f C_r L_r + L_f g \cdot C_r C_f\right) L_f}$$

[Equation 7]

$$k_2 = \frac{\left(L_f + L_r\right) V}{L_f g \cdot C_r + g \cdot C_r L_r - V^2}$$

Here, the coefficients $k_0$, $k_1$, and $k_2$ shown in the equations 5 to 7 can be obtained by solving a motion equation in the plane direction or the planar direction of the vehicle 1 shown in an equation 8 in consideration of the following action or operation to be exerted by the following correction torque $FB_{trq}$. Incidentally, in the equation 8, it is assumed that the inertia moment about a kingpin axis is $I_s$; and that a damping moment coefficient about the kingpin axis is $C_s$.
[Equation 8]

$$I_s \delta \cdot s^2 + C_r \delta \cdot s + F_f L_t = AT$$

Firstly, in the equation 8, it turns out that; if the target assist torque T is obtained with an emphasis on preventing the yaw oscillation of the vehicle 1 (in other words, increasing the damping of the vehicle 1), the target assist torque T may be set on the basis of both the lateral force $F_r$ of the rear wheels 7, 8 and the differential value of the lateral force $F_r$. Specifically, the sum of; a value obtained by multiplying the lateral force $F_r$ of the rear wheels 7, 8 by the coefficient $k_1$ and a value obtained by multiplying the differential value $F_r s$ of the lateral force $F_r$ of the rear wheels 7, 8 by the coefficient $k_2$ may be added to the basic assist torque AT; and the added basic assist torque may be the calculated target assist torque T. As a result, the coefficients $k_1$ and $k_2$ are obtained which are to calculate; both a correction torque component $(k_1 F_r)$ based on the lateral force $F_r$ of the rear wheels 7, 8 (i.e. a correction torque component $(k_1 F_r)$ based on a proportional value $(F_r)$ of the lateral force $F_r$ of the rear wheels 7, 8; and a correction torque component $(k_1 k_2 F_r s)$ based on a differential value $(F_r s)$ of the lateral force $F_r$ of the rear wheels 7, 8); in the correction torque $FB_{trq}$ for correcting the basic assist torque AT.

The abovementioned correction torque component based on the lateral force $F_r$ of the rear wheels 7, 8 mainly acts to reduce the basic assist torque AT. In other words, the correction torque component based on the lateral force $F_r$ of the rear wheels 7, 8 mainly acts to turn the front wheels 5, 6 in a direction to converge the yaw oscillation of the vehicle 1, if the vehicle 1 is in a turning state (in particular, if the vehicle 1 is in a transitional turning state or a transient turning state).

On the one hand, for example, if the vehicle 1 is in a steady turning state, the yaw oscillation unlikely occurs in the vehicle 1 due to the stable behavior of the vehicle 1. On the other hand, even if the vehicle 1 is in the steady turning state, the correction torque component based on the lateral force $F_r$ of the rear wheels 7, 8 is applied to the basic assist torque AT. Thus, even so adding or simply by adding the correction torque component based on the lateral force $F_r$ of the rear wheels 7, 8 to the basic assist torque AT, for example, a driver likely recognizes that the steering operation feels heavy when the vehicle 1 is in the steady turning state. Thus, it is preferable to further apply a torque component to the basic assist torque AT, for canceling a reduction in the basic assist torque AT by the correction torque component based on the lateral force $F_r$ of the rear wheels 7, 8 (in particular, for the reduction when the vehicle 1 is in the turning state or in the steady turning state).

In view of the aforementioned point, in the embodiment, it turns out that; the torque component for canceling the reduction in the basic assist torque AT by the correction torque component based on the lateral force $F_r$ of the rear wheels 7, 8 (in particular, for the reduction when the vehicle 1 is in the turning state or in the steady turning state); may be further applied to the basic assist torque AT, on the basis of the lateral force $F_f$ of the front wheels 5, 6. In other words, particularly when the vehicle 1 is in the steady turning state, the sum of both a correction torque component based on the lateral force $F_f$ of the front wheels 5, 6 and the correction torque component based on the lateral force $F_r$ of the rear wheels 7, 8; is preferably zero. As a result, the coefficient $k_0$ is obtained which is to calculate the correction torque component (a term of $-k_0 F_f L_t$) based on the lateral force $F_f$ of the front wheels 5, 6; in the correction torque $FB_{trq}$.

The correction torque component based on the lateral force $F_f$ of the front wheels 5, 6 obtained from this viewpoint, acts mainly to increase the basic assist torque AT. In particular, the correction torque component based on the lateral force $F_f$ of the front wheels 5, 6 cancels the reduction in the basic assist torque AT by or which has the correction torque component based on the lateral force $F_r$ of the rear wheels 7, 8, particularly when the vehicle 1 is in the steady turning state.

Incidentally, of the correction torque $FB_{trq}$ shown in the equation 4, the correction torque component ($k_1 F_r$) based on the proportional value ($F_r$) of the lateral force $F_r$ of the rear wheels 7, 8 corresponds to one portion of the "first correction steering force" of the present invention (i.e. the "third correction steering force" of the present invention). Moreover, of the correction torque $FB_{trq}$ shown in the equation 4, the correction torque component ($k_1 k_2 F_r s$) based on the differential value ($F_r s$) of the lateral force $F_r$ of the rear wheels 7, 8 corresponds to one portion of the "first correction steering force" of the present invention (i.e. the "fourth correction steering force" of the present invention). Moreover, of the correction torque $FB_{trq}$ shown in the equation 4, the correction torque component (the term of $-k_0 F_f L_t$) based on the lateral force $F_f$ of the front wheels 5, 6 corresponds to the "second correction steering force" of the present invention.

Back in FIG. 2, after the correction torque $FB_{trq}$ is calculated in this manner, delay compensation is performed on the correction torque $FB_{trq}$ by the operation of the ECU 30 (step S15). The delay compensation performed here compensates for the delay of time required for the operations in the step S11 to the step S15 (i.e. time from the time point of the obtainment of the vehicle speed V and the steering angle $\theta$, to the time point of the end of calculation of the correction torque $FB_{trq}$). Specifically, arithmetic calculation expressed by an equation 9 is performed. As a result, correction torque $FB_{out}$ after delay compensation (i.e. a result from the delay compensation performed on the correction torque) is calculated. Incidentally, in the equation 9, it is assumed that correction torque before compensation is $FB_{in}$, that correction torque after compensation is $FB_{out}$, that correction torque before compensation one step before is $FB_{in}z$, that correction torque after compensation one step before is $FB_{out}z$, that a delay compensation time is T1, and that the denominator of the delay compensation time is T2.

[Equation 9]

$$FB_{out} = \frac{\left(1 + \dfrac{T_1}{T_{smp}}\right)FB_{in} - \left(\dfrac{T_1}{T_{smp}}\right)FB_{inZ} + \left(\dfrac{T_2}{T_{smp}}\right)FB_{outZ}}{\left(1 + \dfrac{T_2}{T_{smp}}\right)}$$

Then, the torque obtained by applying the correction torque $FB_{trq}$ (i.e. the correction torque $FB_{out}$ after compensation) on which the delay compensation is performed in the step S15, to the basic assist torque AT calculated in the step S10; is set to the target assist torque T by the operation of the ECU 30 (step S16).

As explained above, according to the embodiment, adding the correction torque component based on the lateral force $F_r$ of the rear wheels 7, 8 (i.e. the correction torque component which reduces the basic assist torque AT), to the basic assist torque AT; can preferably prevent the coupling or resonance between the steering vibration and the yaw oscillation of the vehicle 1. Therefore, it is possible to preferably converge the vibration of the front wheels 5, 6, and as a result, it is possible to improve the convergence of the vehicle 1. In addition, in the embodiment, the correction torque $FB_{trq}$ preferably prevents the resonance or the coupling between the steering vibration and the yaw oscillation of the vehicle 1 without excessively increasing damping control. Therefore, it is possible to improve both converge of the vehicle 1 and converge of the steering.

On the other hand, since the correction torque based on the lateral force $F_f$ of the front wheels 5, 6 (i.e. the correction torque component which increases the basic assist torque AT) is applied to the basic assist torque AT, for example, if the vehicle 1 is in the steady turning state, it is possible to preferably prevent the reduction in the target assist torque T applied to assist the steering operation. Therefore, according to the embodiment, it is possible to receive the effect that it rarely causes a person in the vehicle rarely to recognize discomfort in the steering operation, for example, even if vehicle 1 is in the steady turning state. In other words, the steering feeling can be improved.

As described above, according to the embodiment, it is possible to preferably compensate for lack of the steering force which easily occurs particularly in the steady turning; while preferably preventing the coupling between steering vibration and the yaw oscillation of the vehicle 1 which easily occurs particularly in transient turning (in other words, while improving the convergence of the vehicle 1 and the convergence of the steering).

In addition, in the embodiment, so-called feed-forward control is performed, in which the correction torque $FB_{trq}$ is calculated; after both the lateral force $F_f$ of the front wheels 5, 6 and the lateral force $F_r$ of the rear wheels 7, 8, are estimated in advance. Thus, as compared to so-called feedback control in which the correction torque $FB_{trq}$ is calculated; after both the lateral force $F_f$ of the front wheels 5, 6 and the lateral force $F_r$ of the rear wheels 7, 8 are actually detected; the disadvantage that the discomfort is brought in the steering operation by the delay, can be appropriately prevented.

Moreover, in the embodiment, the delay compensation is performed, so that it is possible to prevent deterioration in the convergence or the discomfort in the steering operation caused by the delay of time required; from the time point in which the operation of calculating the correction torque $FB_{trq}$ is started, to the time point in which the target assist torque T is actually applied.

Incidentally, in the aforementioned explanation, such an aspect was described that both the correction torque component based on the lateral force $F_f$ of the front wheels 5, 6 and the correction torque component based on the lateral force $F_r$ of the rear wheels 7, 8 cancel each other. However, from the viewpoint of the improvement in the steering feeling in the steady turning, both the correction torque component based on the lateral force $F_f$ of the front wheels 5, 6 and the correction torque component based on the lateral force $F_r$ of the rear wheels 7, 8 do not have to completely cancel each other. In other words, as long as at least the steering feeling can be improved, the sum of both the correction torque component based on the lateral force $F_f$ of the front wheels 5, 6 and the correction torque component based on the lateral force $F_r$ of the rear wheels 7, 8 does not have to be zero.

Moreover, even for the coefficients $k_0$, $k_1$, and $k_2$, the aforementioned specific equations (i.e. the equation 5 to the equation 7) are merely one specific example, and preferred coefficients are preferably set in consideration of vehicle conditions including the vehicle features and specification of the vehicle 1 or the electric power steering apparatus 10.

Moreover, the feed-forward control is not necessarily performed from the viewpoint of preferable compensation for the lack of the steering force which easily occurs particularly in the steady turning; while preferably preventing the coupling between the steering vibration and the yaw oscillation of the vehicle 1 which easily occurs particularly in the transient turning. In other words, the feedback control may be performed in which; both the lateral force $F_f$ of the front wheels 5, 6 and the lateral force $F_r$ of the rear wheels 7, 8 are directly detected; and the correction torque is calculated on the basis of both the detected lateral force $F_f$ of the front wheels 5, 6 and the detected lateral force $F_r$ of the rear wheels 7, 8. Even in this case, it is possible to preferably compensate for the lack of the steering force which easily occurs particularly in the steady turning; while preferably preventing the coupling between the steering vibration and the yaw oscillation of the vehicle 1 which easily occurs particularly in the transient turning. Here, it is preferable to compensate for the delay, in the feedback control.

(3) Modified Operation Example

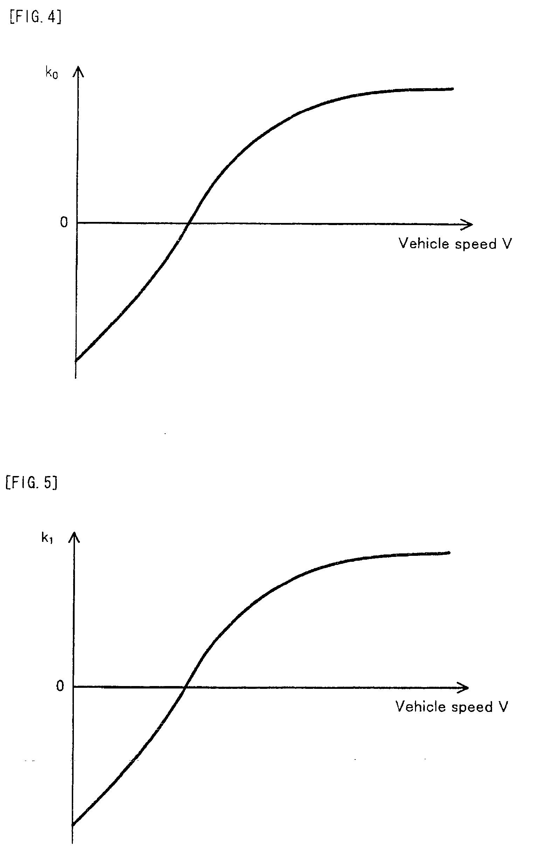

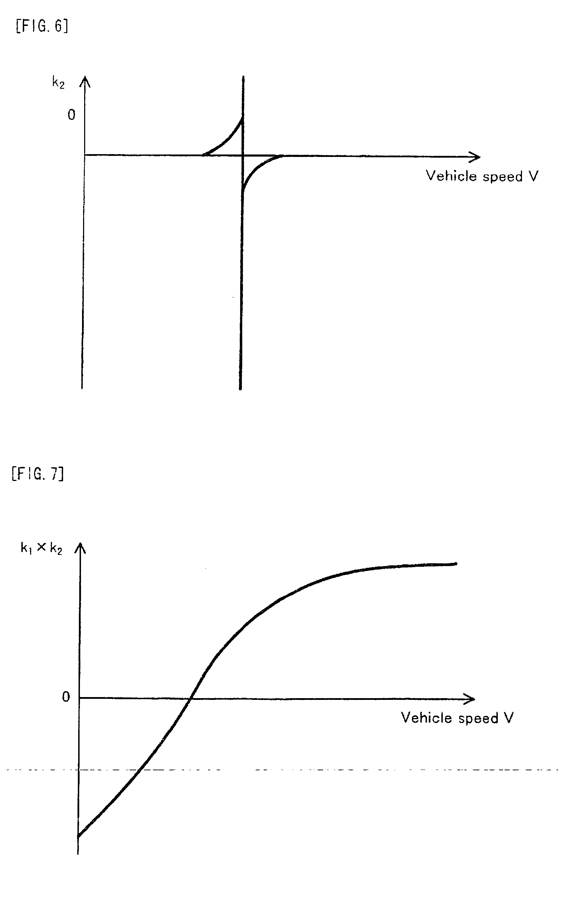

Next, with reference to FIG. 4 to FIG. 7, a modified operation example will be explained. FIG. 4 is a graph showing a correlation of the coefficient $k_0$ by which the lateral force $F_f$ of the front wheels 5, 6 is multiplied, when the correction torque $FB_{trq}$ is calculated, with respect to the vehicle speed V. FIG. 5 is a graph showing the correlation of the coefficient $k_1$ by which a proportional value $F_r$ of the lateral force of the rear wheels 7, 8 is multiplied, when the correction torque $FB_{trq}$ is calculated, with respect to the vehicle speed V. FIG. 6 is a graph showing a correlation of the coefficient $k_2$ by which a differential value $F_r s$ of the lateral force of the rear wheels 7, 8 is multiplied, when the correction torque $FB_{trq}$ is calculated, with respect to the vehicle speed V FIG. 7 is a graph showing a correlation of the multiplied value between the coefficient $k_1$ shown in FIG. 5 and the coefficient $k_2$ shown in FIG. 6, with respect to the vehicle speed V.

Each of the distance $L_f$ between the front shaft and the center of gravity of the vehicle 1, the distance $L_r$ between the rear shaft and the center of gravity of the vehicle 1, the normalized front cornering power $C_f$ of the vehicle 1, and the normalized rear cornering power $C_r$ of the vehicle 1; is a value unique to the vehicle 1. Thus, by inputting specific examples of the unique value (or common parameter) to the equations 5 to 7, the coefficients $k_0$, $k_1$, and $k_2$ shown by the equations 5 to 7 are expressed as functions of the vehicle speed V.

As a result, as shown in FIG. 4 and FIG. 5, it is seen that each of the coefficients $k_0$ and $k_1$ has a vehicle-speed dependency showing the same tendency. Moreover, as shown in FIG. 6, it is seen that; although the coefficient $k_2$ does not have the vehicle-speed tendency, the multiplied value obtained by multiplying the coefficient $k_2$ by the differential value of the lateral force $F_r$ of the rear wheels 7, 8 (i.e. $k_1 \times k_2$) has the vehicle-speed dependency showing the same tendency as that of each of the coefficients $k_0$ and $k_1$, as shown in FIG. 7.

In the modified operation example, focusing on the vehicle-speed dependency of the coefficients, the aforementioned operations are simplified. Specifically, in the modified operation example, coefficients $k_{0v}$, $k_{1v}$, and $h_{2v}$ of a predetermined vehicle speed V are stored in advance in a memory or the like. Then, in actually calculating the correction torque $FB_{trq}$, values obtained by multiplying the coefficients $k_{0v}$, $k_{1v}$, and $k_{2v}$ by a speed coefficient $K_p$ corresponding to the actual vehicle speed V, are used as the coefficients $k_0$, $k_1$, and $k_2$. As a result, the equation 4 is expressed by an equation 10.

$$[\text{Equation 10}]$$

$$FB_{trq} = -k_0 F_f L_t + k_1 (F_r + k_2 F_r s)$$

$$= \left\{ -k_{0v} F_f L_t + k_{1v} (F_r + k_{2v} \times \frac{F_r - F_{rz}}{T_{smp}}) \right\} \times K_p$$

Therefore, this does not require that in order to calculate the coefficients $k_0$, $k_1$, and $k_2$, the equations 5 to 7 are used to calculate the coefficients $k_0$, $k_1$, and $k_2$ in each calculation of the correction torque $FB_{trq}$; and it is only necessary to multiply the coefficients $k_{0v}$, $k_{1v}$, and $k_{2v}$ which are the unique values by the speed coefficient $K_p$ corresponding to the actual vehicle speed V. Therefore, it is possible to significantly reduce a processing load to calculate the coefficients $k_0$, $k_1$, and $k_2$. Therefore, the operation of calculating the correction torque $FB_{trq}$ can be relatively simplified.

Incidentally, in the embodiment, the correction torque $FB_{trq}$ may be further corrected in the following aspect.

For example, a rough road coefficient $K_B$ may be set. The rough road coefficient $K_B$ may be set to a numerical value in a range between 0 and 1. If the vehicle 1 is driving on a rough road (e.g. a road on which the vehicle speed V is high and a road which significantly changes irregularly or unexpectedly, such as a low $\mu$ road and an uneven road), the rough road coefficient $K_B$ is set to 0. Alternatively, the rough road coefficient $K_B$ may be set to a value that is greater than 0 and less than 1, if the vehicle 1 is driving on the rough road. On the other hand, the rough road coefficient $K_B$ is set to 1, if the vehicle 1 is not driving on the rough road (i.e. if the vehicle 1 is driving on a normal road, such as a paved road).

The rough road coefficient $K_B$ is multiplied by the aforementioned coefficient $k_2$. Therefore if the vehicle 1 is driving on the rough road, this can reduce or zero the contribution ratio of the differential value $F_r s$ of the lateral force $F_r$ of the rear wheels 7, 8 including large noise with respect to the calculation of the correction torque $FB_{trq}$ (in other words, this can calculate the correction torque $FB_{trq}$ on the basis of the lateral force $F_r$ of the rear wheels 7, 8 including small noise). As a result, it is possible to preferably calculate the correction torque $FB_{trq}$ while excluding the influence of the rough road as much as possible.

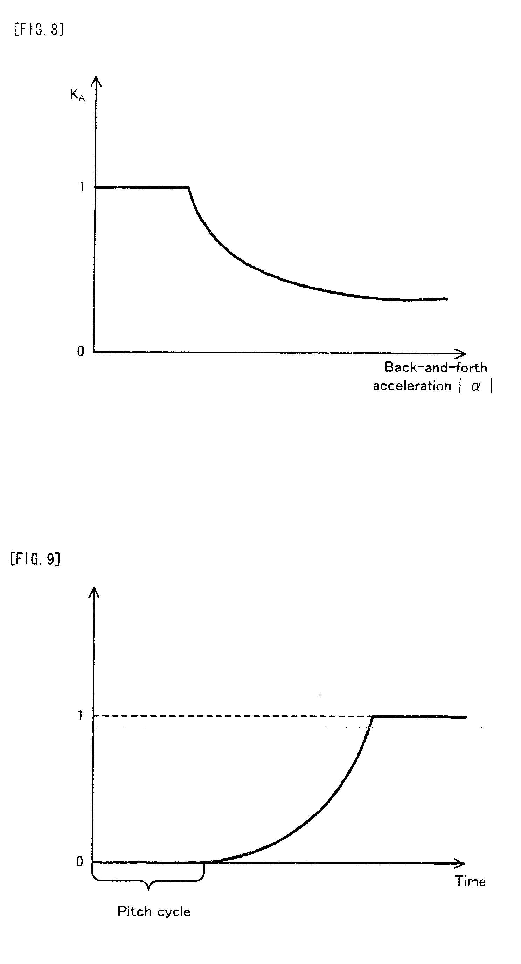

Moreover, a back-and-forth acceleration coefficient $K_A$ may be set. The back-and-forth acceleration coefficient $K_A$ is set to a numerical value in a range between 0 and 1. Specifically, the back-and-forth acceleration coefficient $K_A$ is set in accordance with a graph shown in FIG. 8. FIG. 8 is a graph showing the value of the back-and-forth acceleration coefficient $K_A$ to the absolute value of back-and-forth acceleration $\alpha$, e.g. acceleration which occurs to backward direction or forward direction. As shown in FIG. 8, if the absolute value of back-and-forth acceleration $\alpha$ of the vehicle 1 is equal to or less than a predetermined value, the back-and-forth acceleration coefficient $K_A$ is set to 1. If the absolute value of back-and-forth acceleration $\alpha$ of the vehicle 1 is equal to or greater than the predetermined value, the back-and-forth acceleration coefficient $K_A$ is set to be smaller than 1 as the absolute value of back-and-forth acceleration $\alpha$ of the vehicle 1 increases. Alternatively, if the absolute value of back-and-forth acceleration $\alpha$ of the vehicle 1 is equal to or greater than a predetermined value or if a pitch occurs in the vehicle 1, the back-and-forth acceleration coefficient $K_A$ may be set to 0.

Moreover, as shown in FIG. 9, the back-and-forth acceleration coefficient $K_A$ may be set in accordance with an elapsed time from the start of changing the back-and-forth acceleration $\alpha$. FIG. 9 is a graph showing the value of the back-and-forth acceleration coefficient $K_A$ to an elapsed time from the start of changing the back-and-forth acceleration $\alpha$. As shown in FIG. 9, if the back-and-forth acceleration $\alpha$ starts to change, the back-and-forth acceleration coefficient $K_A$ may be set to 0; until a time corresponding to a pitch cycle unique to the vehicle 1, elapses. The back-and-forth acceleration coefficient $K_A$ may be set to gradually have a large value, in the course of time; after the time corresponding to the pitch cycle, elapses.

The back-and-forth acceleration coefficient $K_A$ is multiplied by the aforementioned coefficient $k_1$. Therefore if the vehicle 1 accelerates and decelerates, this can reduce or zero the contribution ratio of the proportional value $F_r$ of the lateral force of the rear wheels 7, 8 which significantly change due to the acceleration and deceleration with respect to the calculation of the correction torque $FB_{trq}$ (in other words, this can calculate the correction torque $FB_{trq}$ on the basis of the differential value $F_r s$ of the lateral force of the rear wheels 7, 8 which does not significantly change due to the acceleration and deceleration). As a result, it is possible to preferably calculate the correction torque $FB_{trq}$ while excluding the influence of the acceleration and deceleration as much as possible.

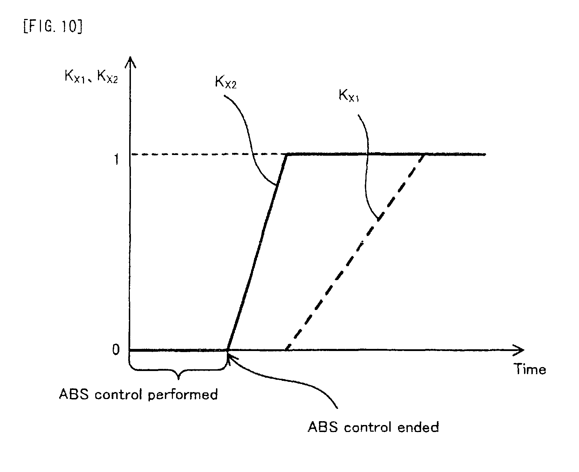

Moreover, ABS coefficients $K_{X1}$ and $K_{X2}$ may be set. The ABS coefficients $K_{X1}$ and $K_{X2}$ are set to a numerical value in a range between 0 and 1. Specifically, the ABS coefficients $K_{X1}$ and $K_{X2}$ are set in accordance with a graph shown in FIG. 10. FIG. 10 is a graph showing the values of the ABS coefficients $K_{X1}$ and $K_{X2}$ to time. As shown in FIG. 10, if ABS control is performed, each of the ABS coefficients $K_{X1}$ and $K_{X2}$ is set to 0. Whether or not the ABS control is performed can be judged from a control signal which is outputted from an ABS control circuit. After that, if the ABS control is ended, firstly, the ABS coefficient $K_{X2}$ is set to gradually have a larger value. After a certain time elapses from the end of the ABS control, then the ABS coefficient $K_{X1}$ is set to gradually have a larger value. At this time, an increment per unit time of the ABS coefficient $K_{X2}$ is greater than an increment per unit time of the ABS coefficient $K_{X1}$. In other words, the slope of the graph associated with the ABS coefficient $K_{X1}$ shown in FIG. 10 is milder than the slope of the graph associated with the ABS coefficient $K_{X2}$ shown in FIG. 10.

Incidentally, instead of the operation of gradually increasing the ABS coefficient $K_{X1}$ and the ABS coefficient $K_{X2}$ after the ABS control is ended, the ABS coefficient $K_{X2}$ may be set to 1 and the ABS coefficient $K_{X1}$ may be set to 0 in a certain period after the end of the ABS control, and then the ABS coefficient $K_{X1}$ may be set to 1, after a certain period further elapses.

Moreover, even in the case that back-and-forth force control is performed, such as VSC and TRC, the ABS coefficients $K_{X1}$ and $K_{X2}$ are preferably set in the same aspect as that in the ABS control.

The ABS coefficient $K_{X1}$ is multiplied by the aforementioned coefficient $k_1$, and the ABS coefficient $K_{X2}$ is multiplied by the aforementioned coefficient $k_2$. This can reduce or zero the contribution ratio of the proportional value $F_r$ of the lateral force of the rear wheels 7, 8 which significantly change due to the back-and-forth force control, with respect to the calculation of the correction torque $FB_{trq}$ (in other words, this can calculate the correction torque $FB_{trq}$ on the basis of the differential value $F_r s$ of the lateral force of the rear wheels 7, 8 which does not significantly change due to the back-and-forth force control). As a result, it is possible to preferably calculate the correction torque $FB_{trq}$ while excluding the influence by the back-and-forth force control as much as possible.

Moreover, a suspension coefficient Kz or SUS coefficient Kz may be set. The SUS coefficient Kz is set to a numerical value in a range between 0 and 1. Specifically, if the suspension control is not performed, the SUS coefficient Kz is set to 1. The fact in which whether or not the suspension control is performed, can be judged from a control signal S3 which is outputted from a SUS control circuit 34. On the other hand, if the suspension control is performed, the SUS coefficient $K_Z$ is set to 0 or a value that is greater than 0 and less than 1.

Moreover, even in the case that vertical load control i.e. variable control of vertical gravity load from the road, is performed, such as stabilizer control, the SUS coefficient $K_Z$ is preferably set in the same aspect as in the suspension control.

The SUS coefficient Kz is multiplied by the aforementioned coefficient $k_1$. This can reduce or zero the contribution ratio of the proportional value $F_r$ of the lateral force of the rear wheels 7, 8 which significantly change due to the vertical load control, with respect to the calculation of the correction torque $FB_{trq}$ (in other words, this can calculate the correction torque $FB_{trq}$ on the basis of the differential value $F_r s$ of the lateral force of the rear wheels 7, 8 which does not significantly change due to the vertical load control). As a result, it is possible to preferably calculate the correction torque $FB_{trq}$ while excluding the influence by the vertical load control as much as possible.

Incidentally, if the vehicle speed V is abnormal (e.g. if hydroplaning phenomenon or the like occurs), the aforementioned coefficient $k_1$ is preferably set to 0. This can reduce or zero the contribution ratio of the proportional value $F_r$ of the lateral force of the rear wheels 7, 8 which significantly change due to the abnormal vehicle speed V, with respect to the calculation of the correction torque $FB_{trq}$ (in other words, this can calculate the correction torque $FB_{trq}$ on the basis of the differential value $F_r s$ of the lateral force of the rear wheels 7, 8 including a small change). As a result, it is possible to preferably calculate the correction torque $FB_{trq}$ while excluding the influence by the abnormal vehicle speed V as much as possible.

Incidentally, in the aforementioned embodiment, the front wheels 5, 6 are steered on the basis of the steering torque MT and the target steering torque T. However, even in so-called active steering in which the steering of the front wheels 5, 6 is performed by an actuator on the basis of the steering angle θ, it is possible to receive the aforementioned various benefits by performing the steering in the same aspect as that of the aforementioned operation.

**Claims**

1. A vehicle steering control apparatus (10) comprising.
   a first calculating device (30) for calculating a basic assist steering force(AT) to assist a steering operation on the basis of at least one of an steering angle (θ) and steering torque (MT) corresponding to the steering operation by a person in a vehicle;
   an obtaining device (30) for obtaining a lateral force (Ff, Fr) of each of the front wheels (5,6) and rear wheels(7,8); **characterized in that** said vehicle steering control apparatus comprises:

   a second calculating device(30) for both calculating a first correction steering force which reduces the basic assist steering force on the basis of the lateral force of the rear wheels and calculating a second correction steering force which increases the basic assist steering force on the basis of the lateral force of the front wheels; and
   a steering force applying device (10) for applying, to the vehicle, a target assist steering force (T) obtained by adding both the first correction steering force and the second correction steering force to the basic assist steering force.

2. The vehicle steering control apparatus (10) according to claim 1, wherein said second calculating device (30) calculates both the first correction steering force and the second correction steering force such that a sum of the first correction steering force and the second correction steering force is nearly zero when the vehicle performs steady-turning.

3. The vehicle steering control apparatus(10) according to claim 1 or 2, wherein said second calculating device 30 calculates a third correction steering force which reduces the basic assist steering force on the basis of a proportional value of the lateral force of the rear wheels; calculates a fourth correction steering force which reduces the basic assist steering force on the basis of a differential value of the lateral force of the rear wheels; and calculates a sum of the third correction steering force and the fourth correction steering force calculated, as the first correction steering force.

4. The vehicle steering control apparatus (10) according to claim 3, wherein said second calculating device(30) calculates both the third correction steering force and the second correction steering force, such that a sum of the third correction steering force and the second correction steering force is nearly zero, when the vehicle performs steady-turning.

5. The vehicle steering control apparatus (10) according to any one of claims 1 to 4, further comprising a detecting device (13, 41) for detecting a speed (V) of the vehicle and the steering angle (θ),
   said obtaining device (30) obtains the lateral force of each of the front wheels and the rear wheels; by estimating the lateral force (Ff, Fr) of each of the front wheels and the rear wheels on the basis of each of a yaw rate (γ) and a slip angle (β) estimated on the basis of the speed of the vehicle and the steering angle detected by said detecting device.

6. The vehicle steering control apparatus (10) according to any one of claims 1 to 5, wherein said second calculating device (30) respectively calculates the first correction steering force and the second correction steering force on the basis of; a multiplication result between the lateral force of the rear wheels and a first correction coefficient calculated on the basis of a motion model of the vehicle in a planar direction and a multiplication result between the lateral force of the front wheels and a second correction coefficient calculated on the basis of a motion model of the vehicle in a planar direction.

7. The vehicle steering control apparatus (10) according to claim 6, wherein
   the first correction coefficient and the second correction coefficient have a dependency to a speed of the vehicle, and

said second calculating device (30) calculates each of the first correction steering force and the second correction steering force, by using a coefficient obtained; by multiplying the first correction coefficient and the second correction coefficient when the speed of the vehicle is a predetermined speed, by a speed coefficient set on the basis of each of an actual speed of the vehicle and the vehicle-speed dependency of the first correction coefficient and the second correction coefficient.

8. The vehicle steering control apparatus (10) according to any one of claims 1 to 7, wherein
said second calculating device (30) performs delay compensation in consideration of time required until the first correction steering force and the second correction steering force are calculated, on the first correction steering force and the second correction steering force, and
said steering force applying device (10) applies the target assist steering force (T) obtained; by adding both the first correction steering force and the second correction steering force on which the delay compensation is performed, to the basic assist steering force(AT).

**Patentansprüche**

1. Fahrzeuglenk-Steuervorrichtung (10), die beinhaltet:

   eine erste Berechnungseinrichtung (30) zum Berechnen einer Basis-Assistenzlenkkraft (AT) zum Assistieren bei einer Lenkoperation auf Grundlage von zumindest einer der Größen Lenkwinkel ($\theta$) und Lenkmoment (MT) entsprechend der Lenkoperation durch eine Person in einem Fahrzeug;
   eine Erlangungseinrichtung (30) zum Erlangen einer Lateralkraft (Ff, Fr) eines jeden der Vorderräder (5, 6) und der Hinterräder (7, 8);
   **dadurch gekennzeichnet, dass** die Fahrzeuglenk-Steuervorrichtung beinhaltet:

   eine zweite Berechnungseinrichtung (30) sowohl zum Berechnen einer ersten Korrektur-Lenkkraft, welche basierend auf der Lateralkraft der Hinterräder die Basis-Assistenzlenkkraft reduziert, als auch zum Berechnen einer zweiten Korrektur-Lenkkraft, welche basierend auf der Lateralkraft der Vorderräder die Basis-Assistenzlenkkraft erhöht; und
   eine Lenkkraft-Aufbringungseinrichtung (10) zum Aufbringen einer Ziel-Assistenzlenkkraft (T), welche durch Addieren von sowohl der ersten Korrektur-Lenkkraft als auch der zweiten Korrektur-Lenkkraft zu der Basis-Assistenzlenkkraft erlangt wird, auf das Fahrzeug.

2. Fahrzeuglenk-Steuervorrichtung (10) nach Anspruch 1, wobei die zweite Berechnungseinrichtung (30) sowohl die erste Korrektur-Lenkkraft als auch die zweite Korrektur-Lenkkraft so berechnet, dass eine Summe von der ersten Korrektur-Lenkkraft und der zweiten Korrektur-Lenkkraft näherungsweise Null beträgt, wenn das Fahrzeug ein stetiges Drehen durchführt.

3. Fahrzeuglenk-Steuervorrichtung (10) nach Anspruch 1 oder 2, wobei die zweite Berechnungseinrichtung (30) eine dritte Korrektur-Lenkkraft, welche die Basis-Assistenzlenkkraft reduziert, basierend auf einem Proportionalwert der Lateralkraft der Hinterräder berechnet, eine vierte Korrektur-Lenkkraft, welche die Basis-Assistenzlenkkraft reduziert, basierend auf einem Differentialwert der Lateralkraft der Hinterräder berechnet und eine Summe von der dritten Korrektur-Lenkkraft und der vierten Korrektur-Lenkkraft, wie berechnet, als die erste Korrektur-Lenkkraft berechnet.

4. Fahrzeuglenk-Steuervorrichtung (10) nach Anspruch 3, wobei die zweite Berechnungseinrichtung (30) sowohl die dritte Korrektur-Lenkkraft als auch die zweite Korrektur-Lenkkraft so berechnet, dass eine Summe von der dritten Korrektur-Lenkkraft und der zweiten Korrektur-Lenkkraft näherungsweise Null beträgt, wenn das Fahrzeug ein stetiges Drehen durchführt.

5. Fahrzeuglenk-Steuervorrichtung (10) nach einem der Ansprüche 1 bis 4, die darüber hinaus eine Erfassungseinrichtung (13, 41) zum Erfassen von einer Geschwindigkeit (V) des Fahrzeugs und des Lenkwinkel ($\theta$) beinhaltet, wobei die Erlangungseinrichtung (30) die Lateralkraft von jedem der Vorderräder und der Hinterräder erlangt durch Schätzen der Lateralkraft (Ff, Fr) von jedem der Vorderräder und der Hinterräder basierend auf sowohl einer Gierrate (T) als auch einem Schlupfwinkel ($\beta$), welche basierend auf der Geschwindigkeit des Fahrzeugs und dem Lenkwinkel geschätzt werden, die durch die Erfassungseinrichtung erfasst werden.

6. Fahrzeuglenk-Steuervorrichtung (10) nach einem der Ansprüche 1 bis 5, wobei die zweite Berechnungseinrichtung (30) die erste Korrektur-Lenkkraft und die zweite Korrektur-Lenkkraft jeweils berechnet basierend auf einem Multiplikationsergebnis von der Lateralkraft der Hinterräder mit einem ersten Korrekturkoeffizienten, welcher basierend auf einem Bewegungsmodell des Fahrzeugs in einer ebenen Richtung berechnet wird, und einem Multiplikationsergebnis von der Lateralkraft der Vorderräder mit einem zweiten Korrekturkoeffizienten, welcher basierend auf einem Bewegungsmodell des Fahrzeugs in einer ebenen Richtung berechnet wird.

7. Fahrzeuglenk-Steuervorrichtung (10) nach Anspruch 6, wobei
der erste Korrekturkoeffizient und der zweite Korrekturkoeffizient eine Abhängigkeit von einer Geschwindigkeit des Fahrzeugs haben, und
die zweite Berechnungseinrichtung (30) die Korrektur-Lenkkräfte erste Korrektur-Lenkkraft und zweite Korrektur-Lenkkraft unter Verwendung eines Koeffizienten berechnet, der erlangt wird durch Multiplizieren des ersten Korrekturkoeffizienten und des zweiten Korrekturkoeffizienten, wenn die Geschwindigkeit des Fahrzeugs einer vorher festgelegten Geschwindigkeit entspricht, mit einem Geschwindigkeitskoeffizienten, der basierend auf sowohl einer tatsächlichen Geschwindigkeit des Fahrzeugs als auch der Abhängigkeit des ersten Korrekturkoeffizienten und des zweiten Korrekturkoeffizienten von der Fahrzeuggeschwindigkeit gesetzt wird.

8. Fahrzeuglenk-Steuervorrichtung (10) nach einem der Ansprüche 1 bis 7, wobei
die zweite Berechnungseinrichtung (30) auf der ersten Korrektur-Lenkkraft und auf der zweiten Korrektur-Lenkkraft eine Verzögerungskompensation unter Beachtung von einer Zeit, welche benötigt wird, bis die erste Korrektur-Lenkkraft und die zweite Korrektur-Lenkkraft berechnet sind, durchführt, und
die Lenkkraft-Aufbringungseinrichtung (10) die Ziel-Assistenzlenkkraft (T) aufbringt, welche erlangt wird durch Addieren von sowohl der ersten Korrektur-Lenkkraft als auch der zweiten Korrektur-Lenkkraft, auf welchen die Verzögerungskompensation durchgeführt wurde, zu der Basis-Assistenzlenkkraft (AT).

**Revendications**

1. Appareil de commande de direction de véhicule (10) comprenant :

   un premier dispositif de calcul (30) pour calculer une force d'aide au braquage de base (AT) pour aider à une opération de braquage sur la base d'au moins l'un d'un angle de braquage ($\theta$) et d'un couple de braquage (MT) correspondant à l'opération de braquage effectuée par une personne dans un véhicule ;
   un dispositif d'obtention (30) pour obtenir une force latérale (Ff, Fr) de chacune des roues avant (5, 6) et des roues arrière (7, 8) ;
   **caractérisé en ce que** ledit appareil de commande de direction de véhicule comprend :

   un deuxième dispositif de calcul (30) à la fois pour calculer une première force de correction de braquage qui réduit la force d'aide au braquage de base sur la base de la force latérale des roues arrière et pour calculer une deuxième force de correction de braquage qui augmente la force d'aide au braquage de base sur la base de la force latérale des roues avant ; et
   un dispositif d'application de force de braquage (10) pour appliquer, au véhicule, une force d'aide au braquage cible (T) obtenue en ajoutant à la fois la première force de correction de braquage et la deuxième force de correction de braquage à la force d'aide au braquage de base.

2. Appareil de commande de direction de véhicule (10) selon la revendication 1, dans lequel ledit deuxième dispositif de calcul (30) calcule à la fois la première force de correction de braquage et la deuxième force de correction de braquage de sorte qu'une somme de la première force de correction de braquage et de la deuxième force de correction de braquage soit presque nulle lorsque le véhicule effectue un braquage continu.

3. Appareil de commande de direction de véhicule (10) selon la revendication 1 ou 2, dans lequel ledit deuxième dispositif de calcul (30) calcule une troisième force de correction de braquage qui réduit la force d'aide au braquage de base sur la base d'une valeur proportionnelle à la force latérale des roues arrière ; calcule une quatrième force de correction de braquage qui réduit la force d'aide au braquage de base sur la base d'une valeur différentielle de la force latérale des roues arrière ; et calcule une somme de la troisième force de correction de braquage et de la quatrième force de correction de braquage calculées, en tant que première force de correction de braquage.

4. Appareil de commande de direction de véhicule (10) selon la revendication 3, dans lequel ledit deuxième dispositif de calcul (30) calcule à la fois la troisième force de correction de braquage et la deuxième force de correction de braquage, de sorte qu'une somme de la troisième force de correction de braquage et de la deuxième force de correction de braquage soit pratiquement nulle, lorsque le véhicule effectue un braquage continu.

5. Appareil de commande de direction de véhicule (10) selon l'une quelconque des revendications 1 à 4, comprenant en outre un dispositif de détection (13, 41) pour détecter une vitesse (V) du véhicule et l'angle de braquage ($\theta$), ledit dispositif d'obtention (30) obtient la force latérale de chacune des roues avant et des roues arrière, en estimant la force latérale (Ff, Fr) de chacune des roues avant et des roues arrière sur la base de chacun d'une amplitude de mouvement de lacet ($\gamma$) et d'un angle de glissement ($\beta$) estimés sur la base de la vitesse du véhicule et de l'angle de braquage détectés par ledit dispositif de détection.

6. Appareil de commande de direction de véhicule (10) selon l'une quelconque des revendications 1 à 5, dans lequel ledit deuxième dispositif de calcul (30) calcule respectivement la première force de correction de braquage et la deuxième force de correction de braquage sur la base d'un résultat de multiplication entre la force latérale des roues arrière et un premier coefficient de correction calculé sur la base d'un modèle de mouvement du véhicule dans une direction plane et d'un résultat de multiplication entre la force latérale des roues avant et un deuxième coefficient de correction calculé sur la base d'un modèle de mouvement du véhicule dans une direction plane.

7. Appareil de commande de direction de véhicule (10) selon la revendication 6, dans lequel le premier coefficient de correction et le deuxième coefficient de correction dépendent d'une vitesse du véhicule, et ledit deuxième dispositif de calcul (30) calcule chacune de la première force de correction de braquage et de la deuxième force de correction de braquage, en utilisant un coefficient obtenu en multipliant le premier coefficient de correction et le deuxième coefficient de correction lorsque la vitesse du véhicule est une vitesse prédéterminée par un coefficient de vitesse fixé sur la base de chacune d'une vitesse réelle du véhicule et de la dépendance vis-à-vis de la vitesse de véhicule du premier coefficient de correction et du deuxième coefficient de correction.

8. Appareil de commande de direction de véhicule (10) selon l'une quelconque des revendications 1 à 7, dans lequel ledit deuxième dispositif de calcul (30) applique une compensation de retard tenant compte du temps nécessaire jusqu'à ce que la première force de correction de braquage et la deuxième force de correction de braquage soient calculées à la première force de correction de braquage et à la deuxième force de correction de braquage, et ledit dispositif d'application de force de braquage (10) applique la force d'aide au braquage cible (T) obtenue, en ajoutant à la fois la première force de correction de braquage et la deuxième force de correction de braquage auxquelles la compensation de retard est appliquée à la force d'aide au braquage de base (AT).

[FIG. 1]

[FIG. 2]

```
              ┌─────────────┐
              │    Start     │
              └─────────────┘
                    │
                    ▼
        ┌─────────────────────┐
        │ Calculate basic assist│ ⌇ S10
        │      torque AT        │
        └─────────────────────┘
                    │
                    ▼
        ┌─────────────────────┐
        │ Obtain the vehicle    │
        │ speed V and the       │ ⌇ S11
        │ steering angle  θ     │
        └─────────────────────┘
                    │
                    ▼
        ┌─────────────────────┐
        │ Estimate a yaw rate   │ ⌇ S12
        │ γ  and a slip angle  β│
        └─────────────────────┘
                    │
                    ▼
        ┌─────────────────────┐
        │   Estimate a front    │
        │ wheel lateral force F_f│ ⌇ S13
        │   and a rear wheel    │
        │  lateral force F_r     │
        └─────────────────────┘
                    │
                    ▼
        ┌─────────────────────┐
        │ Calculate correction  │ ⌇ S14
        │   torque FB_{trq}      │
        └─────────────────────┘
                    │
                    ▼
        ┌─────────────────────┐
        │  Calculate delay-     │
        │   compensated         │ ⌇ S15
        │ correction torque     │
        │      FB_{out}         │
        └─────────────────────┘
                    │
                    ▼
        ┌─────────────────────┐
        │  Set AT＋FB_{out}      │
        │  to target assist     │ ⌇ S16
        │     torque T          │
        └─────────────────────┘
                    │
                    ▼
              ┌─────────────┐
              │     End      │
              └─────────────┘
```

[FIG. 3]

[FIG. 4]

[FIG. 5]

[FIG. 6]

[FIG. 7]

[FIG. 8]

[FIG. 9]

[FIG. 10]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005193779 A
- JP 2006131064 A
- JP 2006160180 A
- JP 2004203112 A